# EUROPEAN PATENT APPLICATION

(11) **EP 4 435 131 A1**
(43) Date of publication of application: **25.09.2024**
(21) Application number: 23737086.1
(22) Date of filing: 05.01.2023
(51) Int. Cl.: C22C 38/02, C22C 38/04, C22C 38/06, C22C 38/12, C22C 38/14, C21D 1/26, C21D 6/00, C21D 8/12, C22C 33/04

(54) **NON-ORIENTED ELECTRICAL STEEL PLATE WITH GOOD MAGNETIC PERFORMANCE AND MANUFACTURING METHOD THEREFOR**

(30) Priority: 07.01.2022 CN 202210016156
(71) Applicant: BAOSHAN IRON & STEEL CO., LTD., Shanghai 201900 (CN)
(72) Inventor: LI, Guobao, Shanghai 201900 (CN); ZHANG, Feng, Shanghai 201900 (CN); LYU, Xuejun, Shanghai 201900 (CN); FANG, Xianshi, Shanghai 201900 (CN); GU, Yeqiao, Shanghai 201900 (CN); WANG, Bo, Shanghai 201900 (CN)
(74) Representative: Nederlandsch Octrooibureau
(86) International application number: PCT/CN2023/070637
(87) International publication number: WO 2023/131224

(57) **Abstract**

Disclosed in the present invention is a non-oriented electrical steel plate with good magnetic performance. In addition to Fe and inevitable impurities, the non-oriented electrical steel plate further contains the following chemical elements, in percentage by mass: O<C≤0.0025%, Si: 0.2-1.6%, Mn: 0.2-0.6%, Al: 0.2-0.6%, V: 0.001-0.008%, N: 0.002-0.0045%, 0<Nb≤0.003% and 0<Ti≤0.003%. In addition, further disclosed in the present invention is a manufacturing method for the non-oriented electrical steel plate with good magnetic performance. The manufacturing method comprises the steps of: (1) smelting and casting; (2) hot rolling, wherein a steel coil is not subjected to normalizing annealing or cover annealing after hot rolling, but is directly introduced to the next step; (3) acid pickling; (4) cold rolling; and (5) finished product annealing, wherein the cold-rolled steel plate is rapidly heated from room temperature to a target soaking temperature at a heating rate of 80-1000 °C/s. The non-oriented electrical steel plate of the present invention has good electromagnetic performance, low iron loss and high magnetic induction, can be effectively used for preparing an iron core, and has good popularization prospects and application value.

## Description

### TECHNICAL FIELD

The present disclosure relates to a steel plate and a manufacturing method therefor, in particular to a non-oriented electrical steel plate and a manufacturing method therefor.

### BACKGROUND

The market and users have long been pursuing the goal of energy saving and consumption reduction for the iron cores of various electric appliances, electric power tools and the like. In other words, non-oriented electrical steel plates, which are the raw materials for making these iron cores, are required to have corresponding characteristics of high magnetic induction and low iron loss.

Researches show that in order to obtain a non-oriented electrical steel plate with good electromagnetic performance, it is necessary to properly control the chemical composition of steel, and improve the grain size and favorable texture of the finished steel plate.

In the prior art, many researchers have conducted extensive research on the research topic of improving the electromagnetic performance of non-oriented electrical steel plates, and have achieved certain research results.

For example, the application with the publication number of JP 2008260980 and the publication date of October 30, 2008, and the title of "Method for Producing High-Grade Non-Oriented Electrical Steel Sheet" discloses a non-oriented electromagnetic steel plate. In the technical solutions disclosed in this application, the grain size and crystal texture of the hot-rolled plate are improved by increasing the exit temperature of hot-rolled slab, which is generally about 1230°C to 1320°C. The prepared finished steel plate has good surface condition and high magnetic induction. However, in order to prevent non-metallic inclusions such as S and N from being fully dissolved and dispersed during the heating and rolling of the slab after the slab exit temperature is increased, which can deteriorate the iron loss of the finished steel plate, this technology also adopts the method of adding 0.005-0.03% calcium-containing alloy or rare earth elements to purify molten steel, and strictly requires that the content of S and N must be less than 0.0015%. This design scheme not only increases the difficulty of smelting control, but also increases the production cost, and requires special slab heating equipment, thus being not conducive to popularization and application.

For another example, the Chinese application with the publication number of CN101343683A and the publication date of January 14, 2009, and a title of "Method for Manufacturing Non-oriented Electrical Steel with Low Iron Loss and High Magnetic Induction" discloses a method for manufacturing non-oriented electrical steel with low iron loss and high magnetic induction. In the technical solutions disclosed in this application, the process steps are: controlling the heating temperature of the slab to 900-1150 °C, subjecting the hot-rolled plate to normalizing and acid pickling followed by single cold rolling to a thickness of 0.50 mm, and finally performing stress relief annealing in a hydrogen-nitrogen mixed gas atmosphere to obtain a non-oriented electrical steel product with low iron loss and high magnetic induction. The advantages are that the final non-oriented electrical steel product is good in magnetic performance, P_{15/50}=3.1-3.8 W/kg, B₅₀₀₀=1.69-1.81 T, and that the slab contains 1.0-2.0% of Si and 0-0.60% of Al, and 1.5%≤Si+3Al≤3.2% and contains no alloying elements such as Sn, Sb, Bi, Cu, Cr, Ni, B, Ca and Ce, and the production cost is greatly reduced, and a finished non-oriented electrical steel with good magnetic performance is produced.

For another example, the Chinese application with the publication number of CN104073715A and the publication date of October 1, 2014, and a title "Non-oriented Electrical Steel with High Magnetic Induction and Manufacturing Method Thereof" discloses a non-oriented electrical steel with high magnetic induction. In the technical solutions disclosed in this application, by controlling the heating rate of the normalizing heating section and the speed of the normalizing cooling section, and adopting a proper shot blasting and acid pickling process system, raw materials with excellent plate quality are provided for the subsequent process, and the magnetic induction B₅₀ can be increased by 200-500 gauss and the actual physical quality level of iron loss can be increased by 3-5% without adding additional alloying elements or changing the finished product annealing process. In addition, the magnetic performance of the product can be further improved by optimising the annealing process, so that the magnetic induction can be further increased. The non-oriented electrical steel with high magnetic induction meets the requirements of conventional motors, and also meets the requirements of high magnetic induction of electrical steel for high-efficiency and variable-frequency motor cores, and can improve motor efficiency and reduce energy consumption and noise of the product.

However, different from the above-mentioned existing technical solutions, the present inventors adopt a brand-new design idea, and expects to obtain a new non-oriented electrical steel plate with good magnetic performance, which optimises the chemical composition of the steel and defines a reasonable manufacturing process, which can effectively improve the electromagnetic performance of the non-oriented electrical steel plate, reduce the iron loss and increase the magnetic induction.

### SUMMARY

One of the objects of the present disclosure is to provide a non-oriented electrical steel plate with good magnetic performance. The non-oriented electrical steel plate has good magnetic performance, with an iron loss P_{15/50} of 3.2 W/kg or less, and a magnetic induction B₅₀ of 1.75 T or more, and can be effectively used for preparing an iron core and used in various electrical appliances and power tools, and has very good popularisation prospects and application values.

In order to achieve the above object, the present disclosure provides a non-oriented electrical steel plate with good magnetic performance, comprising, in addition to Fe and inevitable impurities, the following chemical elements, in percentage by mass: 0<C≤0.0025%, Si: 0.2-1.6%, Mn: 0.2-0.6%, Al: 0.2-0.6%, V: 0.001-0.008%, N: 0.002-0.0045%, 0<Nb≤0.003% and 0<Ti≤0.003%.

Preferably, the non-oriented electrical steel plate according to the present disclosure comprises the following chemical elements in percentage by mass: 0<C≤0.0025%, Si: 0.2-1.6%, Mn: 0.2-0.6%, Al: 0.2-0.6%, V: 0.001-0.008%, N: 0.002-0.0045%, 0<Nb≤0.003%, 0<Ti≤0.003%, with the balance being Fe and inevitable impurities.

In the non-oriented electrical steel plate according to the present disclosure, the design principle of each chemical element is as follows.

C: In the non-oriented electrical steel plate according to the present disclosure, the content of C in steel should not be too high. When the content of C in the steel is higher than 0.0025%, a large number of C-containing inclusions will be formed, which will lead to a great increase in the magnetic aging of the finished steel plate. Therefore, in the non-oriented electrical steel plate according to the present disclosure, the percentage by mass of C is controlled to be 0<C≤0.0025%.

Si: In the non-oriented electrical steel plate according to the present disclosure, the content of Si is medium to low. For the present technical solution, when the content of Si is higher than 1.6%, not only is the manufacturing cost of the steel increased, but also the magnetic induction of the finished steel plate is greatly reduced; while when the content of Si is lower than 0.2%, the effect of effectively reducing the iron loss cannot be achieved. Therefore, in the non-oriented electrical steel plate according to the present disclosure, the percentage by mass of Si is controlled to 0.2%-1.6%.

Mn: In the non-oriented electrical steel plate according to the present disclosure, when the content of the added Mn is higher than 0.6%, the favorable texture of the finished non-oriented electrical steel plate will be significantly deteriorated; while when the content of Mn in steel is lower than 0.2%, the effect of controlling S-containing inclusions cannot be achieved. Therefore, considering the influence of the content of Mn on steel properties, in the non-oriented electrical steel plate according to the present disclosure, the percentage by mass of Mn is controlled to be 0.2%-0.6%.

Al: In the non-oriented electrical steel plate of the present disclosure, when the content of added Al is higher than 0.6%, the pourability of molten steel will be obviously reduced; while when the content of Al in steel is lower than 0.2%, the effect of effectively reducing the iron loss cannot be achieved. Therefore, in order to ensure that Al can exert its beneficial effect, in the non-oriented electrical steel plate according to the present disclosure, the percentage by mass of Al is controlled to 0.2%-0.6%.

V: In the prior art, the V element in non-oriented electrical steel is an impurity element introduced during the steelmaking process, and its content is strictly controlled. The lower the content, the better. In contrast, the present disclosure uses V as a beneficial element in the steelmaking process, and the content of V is consciously adjusted. The present disclosure has changed from the previous method of reducing the content of V as much as possible to reduce the content of harmful inclusions as much as possible to consciously adding a certain amount of V content. By controlling the type and quantity of N-containing inclusions, in combination with the adjustments of the manufacturing process, the present disclosure maximizes the harmless treatment of Nb, V and Ti content. In this way, the collocation and combination of chemical components that are beneficial to obtaining good magnetic performance and the reasonable preconditions for controlling the types of inclusions are realised.

In the non-oriented electrical steel plate according to the present disclosure, when the content of V in the steel is lower than 0.001%, the effect of controlling C- and N-containing inclusions cannot be achieved. However, it should be noted that the amount of V element added in the steel should not be too much. When the content of V element in the steel is higher than 0.008%, the number of C- and N-containing inclusions containing V will be significantly increased, and their sizes will be small. Therefore, in the non-oriented electrical steel plate according to the present disclosure, the percentage by mass of Vis controlled to 0.001%-0.008%.

N: In the non-oriented electrical steel plate according to the present disclosure, when the content of N is lower than 0.002%, the effect of reasonably controlling C- and N-containing inclusions cannot be achieved. However, it should be noted that the content of N in the steel should not be too high. When the content of N in steel exceeds 0.0045%, the number of N-containing inclusions will increase significantly, which will inhibit the grain growth of the finished steel plate and deteriorate the electromagnetic performance of the finished steel plate. Therefore, in the non-oriented electrical steel plate according to the present disclosure, the percentage by mass of N is controlled to 0.002%-0.0045%.

Meanwhile, it should be noted that in the present disclosure, considering that it is difficult to obtain a low content of N element, and a large number of fine AlN inclusions are easily generated when the Al content is 0.2-0.6%, the inventors chose to add 0.002-0.0045% of N to the steel, together with 0.001-0.008% of V element. Here, the main reasons for adding V as a beneficial element are as follows: carbides and nitrides of V have much lower deterioration effect on the electromagnetic performance of finished steel plates than carbides and nitrides of Al, Nb, Ti and the like; and the carbides and nitrides of V are relatively stable.

Nb: In the present technical solutions, when the content of Nb is higher than 0.003%, C- and N-containing inclusions in the steel will increase abnormally, thereby leading to a sharp increase in the iron loss of the finished steel plate. Therefore, in the present disclosure, the content of Nb is controlled to satisfy: 0<Nb≤0.003%.

Ti: In the present technical solutions, when the content of Ti is higher than 0.003%, C- and N-containing inclusions in the steel will also increase abnormally, thereby leading to a sharp increase in the iron loss of the finished steel plate. Therefore, in the present disclosure, the content of Ti is controlled to satisfy: 0<Ti≤0.003%.

Further, in the non-oriented electrical steel plate according to the present disclosure, the percentage by mass of V is 0.0015-0.0045%.

Further, in the non-oriented electrical steel plate according to the present disclosure, in the inevitable impurities, S≤0.002%.

Different from the common design ideas in the past, the present disclosure not only strictly controls the content of C to reduce the formation of C-containing inclusions, but also strictly controls the content of S. This is because the higher the content of S in the steel, the greater the number of S-containing inclusions formed at the end of the solidification of molten steel or the end of the hot rolling, and the fine size of the S-containing inclusions deteriorates the electromagnetic performance of the steel much more than the N-containing inclusions. However, it should be noted that the difficulty of controlling the content of S element is much lower than that of N element. In order to obtain a lower S content, there are many technical means that can be selected in the actual operation process, such as limiting the S content of raw and auxiliary materials for ironmaking and steelmaking, and deep desulfurisation by adding desulfuriser in hot metal pretreatment, converter smelting and RH refining.

In the above solutions, the less unavoidable impurities in the steel, the better, as long as technical conditions and production costs allow. When the content of S is higher than 0.002%, the number of S-containing inclusions increases significantly, which inhibits the grain growth of the finished steel plate and deteriorates the electromagnetic performance of the finished steel plate.

Preferably, the non-oriented electrical steel plate according to the present disclosure comprises inclusions, which are inclusions containing C and/or N, mainly composed of AlN, VN, VC and V(CN).

In the present disclosure, the chemical element design according to the present disclosure is adopted and smelting is carried out under appropriate smelting conditions, so that C- and N-containing inclusions can be obtained. The C- and N-containing inclusions in steel are large in size and few in number, and the main inclusions are AlN, VN, VC and V(CN), and the inclusions also include a small amount of TiC, TiN, Ti(CN) and NbC, NbN and Nb(CN).

Preferably, in the non-oriented electrical steel plate according to the present disclosure, the C- and N-containing inclusions have a size of 200-500 nm.

Preferably, in the non-oriented electrical steel plate according to the present disclosure, the following formula is satisfied: 1.5≤AlN content/(VN content+VC content +V(CN) content)≤4.0. The use of this control is beneficial to grain growth and iron loss reduction of the steel plate during annealing.

Preferably, in the non-oriented electrical steel plate according to the present disclosure, the iron loss P_{15/50} is ≤3.2 W/kg, and the magnetic induction B₅₀ is ≥1.75 T.

Accordingly, another object of the present disclosure is to provide a simple and feasible method of manufacturing the above-mentioned non-oriented electrical steel plate with good magnetic performance. By using this manufacturing method, non-oriented electrical steel plates with good magnetic performances (iron loss P_{15/50} ≤3.2 W/kg, magnetic induction B₅₀ ≥1.75 T) can be obtained.

In order to achieve the above object, the present disclosure provides a method of manufacturing a non-oriented electrical steel plate with good magnetic performance, including the steps of:
(1) smelting and casting;
(2) hot rolling, wherein the steel coil is not subjected to normalizing annealing or cover annealing after hot rolling, but is directly introduced to the next step;
(3) acid pickling;
(4) cold rolling; and
(5) finished product annealing, wherein the cold-rolled steel plate is rapidly heated to a target soaking temperature at a heating rate of 80-1000 °C/s.

In the present disclosure, the inventors optimize the chemical composition of the steel, intentionally add V element to the steel, and strictly limit the content of harmful elements C and N in the steel to effectively control the harmful C- and N-containing inclusions in the steel. At the same time, based on the need to control harmful inclusions in the steel, the inventors also define a reasonable manufacturing process. The qualified slab obtained by smelting and casting is not subjected to normalizing annealing or cover annealing after hot rolling, but is directly subjected to acid pickling and single cold rolling to a target thickness, and then subjected to continuous annealing, which can be performed by an electromagnetic induction device with a rapid heating function, so that a non-oriented electrical steel plate with good magnetic performance that meets the design requirements of the present disclosure can be obtained. In the present disclosure, there are no special restrictions on hot rolling, acid pickling and cold rolling, and the principle is not to increase the manufacturing cost and production difficulty of steel.

In addition, it should be noted that in the prior art, although there are some technical solutions that do not require normalizing annealing or cover annealing, most of these steels are high-silicon steels with a high content of Si. Different from the prior art, the steel of the present disclosure has a Si content of merely 0.2-1.6% and is a medium-to-low silicon steel. The present disclosure uses the medium-to-low silicon steel but does not require the above normalizing annealing or cover annealing treatment.

In step (5) of the above manufacturing method of the present disclosure, an electromagnetic induction device with a rapid heating function is used. The device is not limited to longitudinal or transverse magnetism, but its heating capacity needs to meet the requirement of rapidly heating the cold-rolled steel plate to the target soaking temperature at a heating rate of 80-1000 °C/s.

Compared with the conventional annealing method using gas and electric heating (generally lower than 30 °C/s), the present disclosure adopts the electromagnetic induction heating device with a rapid heating function for finished product annealing, so as to realize rapid heating of the cold-rolled steel plate to the target soaking temperature in a short time. The starting temperature of heating may be any temperature below the soaking temperature, for example, heating may be started from room temperature. By adopting this annealing method, the recovery of the cold-rolled steel plate during continuous annealing can be effectively suppressed, and the residual deformation stored energy of the cold-rolled steel plate before recrystallisation can be significantly increased, which can lead to the accumulation and increase of driving force for nucleation, and promote nucleation and migration of large-angle grain boundaries. At the same time, the preferred orientation of crystal nucleus is also reduced, and finally the <111>//ND strength of the recrystallisation texture components can be reduced, thus achieving higher magnetic induction and lower iron loss.

It should be noted that during rapid heating annealing of the cold-rolled steel plate, it is necessary to limit the heating rate of the cold-rolled steel plate to 80-1000 °C/s, in order to further increase the driving force for nucleation and growth, so as to improve and control the final recrystallisation effect, and to ensure that the grain structure is coarse and uniform, with a small proportion of harmful grain orientations after finished product annealing. When the heating rate of rapid heating is too slow (heating rate is lower than 80 °C/s), the stored energy of cold rolling deformation is released too quickly, which is not conducive to the subsequent control of favorable texture; when the rapid heating rate is too fast (heating rate is higher than 1000 °C/s), the requirements on equipment capacity are too high, resulting in expensive equipment costs, and will cause the cold-rolled strip to resident in the high-temperature stage for too long, resulting in poor uniformity of the grain structure.

Preferably, in the manufacturing method of the present disclosure, in step (5), the target soaking temperature is 800-1000 °C.

Preferably, in the manufacturing method of the present disclosure, in the casting process of step (1), the superheat of the molten steel is controlled to be 10-35 °C, and the time for transition between solid phase and liquid phase is controlled to be 10 s-120 min. With the proceeding of the casting of the molten steel, the temperature is within the range of 900-1150 °C, and the slab is cooled at a rate of 10°C/min or less.

In the above technical solutions of the present disclosure, in order to ensure good precipitation effect of carbides and nitrides of V, during the casting process, it may be preferable to control the superheating of the molten steel within the range of 10-35 °C, and adjust the time for transition between solid phase and liquid phase within the range of 10 s-120 min.

In addition, from the viewpoint of production efficiency and inclusion size control effect, the time for transition between solid phase and liquid phase is further preferably controlled to be within the range of 20 s to 50 min. The premise is that during the casting and solidification of the molten steel, the temperature is within the range of 900-1150 °C, and the slab is cooled at a rate of 10 °C/min or less.

Preferably, in the manufacturing method according to the present disclosure, in step (2), during the hot rolling, the time for the slab in a reheating furnace is controlled to be 120-360 min, the initial hot rolling temperature is 1050-1150 °C, the final hot rolling temperature is 650-950 °C, and the coiling temperature is 500-900 °C.

Preferably, in the manufacturing method according to the present disclosure, in step (2), the target thickness of the hot-rolled steel plate is controlled to be 0.8-3.5 mm; in step (4), the target finished product thickness is obtained by single cold rolling.

Compared with the prior art, the non-oriented electrical steel plate with good magnetic performance and the manufacturing method therefor according to the present disclosure have the following advantages and beneficial effects.

Different from the traditional way of thinking, in the steelmaking process of the present disclosure, V is taken as a beneficial element, and the content of V is consciously adjusted.

In the non-oriented electrical steel plate according to the present disclosure, the inventors adopted an optimized design for the proportion of chemical element components. The slab prepared by smelting and casting does not need to be subjected to normalizing annealing or cover annealing after hot rolling, but is directly subjected to acid pickling and cold rolling, then subjected to rapid heating to ensure that the cold-rolled steel plate is rapidly heated to the target soaking temperature at a high heating rate, so that the electromagnetic performance required by the design of the present disclosure can be obtained.

The design idea of chemical elements of the present disclosure is completely different from that of the prior art. Also, the manufacturing method of the present disclosure is simple and feasible. The prepared non-oriented electrical steel plate has the characteristics of high magnetic induction and low iron loss, with iron loss P_{15/50} of 3.2 W/kg or less, and magnetic induction B₅₀ of 1.75 T or more, so that the non-oriented electrical steel plate can be effectively used for preparing iron cores and has good popularization prospects and application values.

### BRIEF DESCRIPTION OF THE DRAWINGS

FIG. 1 is a microstructure photograph of the finished non-oriented electrical steel plate of Example 5.
FIG. 2 is a microstructure photograph of the comparative steel plate of Comparative Example 3.
FIG. 3 schematically shows the relationship between the average size of carbide and nitride inclusions and the iron loss of the finished non-oriented electrical steel plate.

### DETAILED DESCRIPTION

The non-oriented electrical steel plates with good magnetic performance and the manufacturing method therefor according to the present disclosure will be further explained and illustrated with reference to the accompanying drawings and the specific examples. However, the explanations and illustrations do not unduly limit the technical solutions of the present disclosure.

### Examples 1-10 and Comparative Examples 1-3

Table 1 lists the mass percentages of chemical elements of the non-oriented electrical steel plates of Examples 1-10 and the comparative steel plates of Comparative Examples 1-3.

**Table 1 (wt%, the balance is Fe and inevitable impurities other than S)**

| No. | Chemical composition | | | | | | | | |
|---|---|---|---|---|---|---|---|---|---|
| | C | Si | Mn | S | Al | N | V | Nb | Ti |
| Example 1 | 0.0008 | 0.22 | 0.25 | 0.0010 | 0.25 | 0.0022 | 0.0022 | 0.0018 | 0.0016 |
| Example 2 | 0.0012 | 0.41 | 0.31 | 0.0008 | 0.60 | 0.0037 | 0.0031 | 0.0004 | 0.0003 |
| Example 3 | 0.0024 | 0.92 | 0.27 | 0.0012 | 0.29 | 0.0016 | 0.0055 | 0.0012 | 0.0017 |
| Example 4 | 0.0016 | 0.27 | 0.45 | 0.0020 | 0.44 | 0.0020 | 0.0080 | 0.0007 | 0.0021 |
| Example 5 | 0.0004 | 0.59 | 0.60 | 0.0015 | 0.36 | 0.0045 | 0.0022 | 0.0011 | 0.0028 |
| Example 6 | 0.0021 | 0.98 | 0.30 | 0.0007 | 0.28 | 0.0017 | 0.0046 | 0.0009 | 0.0011 |
| Example 7 | 0.0012 | 1.24 | 0.45 | 0.0005 | 0.51 | 0.0042 | 0.0062 | 0.0001 | 0.0015 |
| Example 8 | 0.0013 | 1.51 | 0.51 | 0.0007 | 0.27 | 0.0030 | 0.0067 | 0.0004 | 0.0004 |
| Example 9 | 0.0019 | 1.26 | 0.29 | 0.0004 | 0.24 | 0.0024 | 0.0041 | 0.0027 | 0.0008 |
| Example 10 | 0.0015 | 1.58 | 0.37 | 0.0018 | 0.58 | 0.0024 | 0.0019 | 0.0020 | 0.0003 |
| Comparative Example 1 | **0.0032** | 0.24 | 0.25 | **0.0027** | 0.37 | **0.0007** | **0.0004** | 0.0009 | **0.0047** |
| Comparative Example 2 | 0.0009 | 0.88 | 0.41 | 0.0014 | **0.0025** | **0.0067** | 0.0039 | 0.0025 | 0.0022 |
| Comparative Example 3 | 0.0014 | 1.53 | **0.65** | **0.0042** | 0.48 | 0.0027 | **0.0008** | **0.0041** | 0.0014 |

In the present disclosure, the non-oriented electrical steel plates of Examples 1-10 and the comparative steel plates of Comparative Examples 1-3 were all prepared by the following steps (1)-(5).
(1) Smelting and casting were performed according to the chemical composition ratio shown in Table 1. During casting, the superheat of molten steel was controlled to 10-35 °C, the time for transition between solid phase and liquid phase was controlled to 10 s-120 min, and the cooling rate of the slab was controlled to 10 °C/min or less within the range of 900-1150 °C with the proceeding of the casting of the molten steel.
(2) Hot rolling: during the hot rolling, the time for the slab in the reheating furnace was controlled to 120-360 min, the initial hot rolling temperature was controlled to 1050-1150 °C, final hot rolling was performed in 2-8 passes, the final hot rolling temperature was controlled to 650-950 °C, and the coiling temperature was controlled to 500-900 °C. The steel coils were not subjected to normalizing annealing or cover annealing after hot rolling, but directly entered the next step.
(3) Acid pickling.
(4) Cold rolling: cold rolled once to a target finished product thickness of 0.50 mm.
(5) Finished product annealing: the cold-rolled steel plates were rapidly heated to a target soaking temperature of 800-1000 °C at a heating rate of 80-1000 °C/s.

It should be noted that in the present disclosure, the chemical composition and related process parameters of the non-oriented electrical steel plates of Examples 1-10 all meet the control requirements of the design specification of the present disclosure. However, there are chemical compositions and process parameters that fail to meet the design requirements of the present disclosure in Comparative Examples 1-3.

Table 2 lists the specific process parameters of the non-oriented electrical steel plates of Examples 1-10 and the comparative steel plates of Comparative Examples 1-3.

**Table 2**

| No. | Superhea t (°C) | Time for transitio n between solid phase and liquid phase | Slab temperatur e (°C) | Cooling rate of slab (°C/min ) | Time for slab in reheatin g furnace (min) | Initial hot rolling temperatur e (°C) | Final hot rolling temperatur e (°C) | Coiling temperatur e (°C) | Target thickness of hot-rolle d steel plate (mm) | Heating starting temperatur e of finished product annealing (°C) | Heating rate of finished product annealin g (°C/s) | Target soaking temperatur e of finished product annealing (°C) |
|---|---|---|---|---|---|---|---|---|---|---|---|---|
| Example 1 | 20 | 10s | 900 | 5 | 180 | 1080 | 900 | 720 | 2.6 | RT | 80 | 860 |
| Example 2 | 30 | 20s | 1000 | 1 | 120 | 1130 | 880 | 680 | 3.0 | RT | 150 | 980 |
| Example 3 | 15 | 10 min | 1050 | 4 | 220 | 1100 | 880 | 800 | 2.2 | RT | 250 | 920 |
| Example 4 | 10 | 30 min | 920 | 2 | 300 | 1050 | 950 | 900 | 1.8 | 50 | 450 | 940 |
| Example 5 | 35 | 50 min | 970 | 7 | 360 | 1080 | 920 | 900 | 1.2 | 150 | 700 | 900 |
| Example 6 | 25 | 120 min | 1020 | 3 | 150 | 1150 | 700 | 650 | 2.0 | 400 | 850 | 960 |
| Example 7 | 15 | 20s | 1090 | 10 | 120 | 1120 | 650 | 500 | 2.4 | 200 | 1000 | 900 |
| Example 8 | 35 | 50 s | 970 | 5 | 270 | 1150 | 850 | 570 | 2.8 | 100 | 100 | 930 |
| Example 9 | 25 | 2 min | 1140 | 7 | 340 | 1060 | 750 | 620 | 2.2 | RT | 350 | 840 |
| Example 10 | 15 | 40 min | 1050 | 2 | 360 | 1100 | 900 | 680 | 2.6 | 600 | 550 | 980 |
| Comparativ e Example 1 | 20 | 20 min | **1200** | **20** | 180 | 1150 | 800 | 570 | 2.0 | RT | **15** | 980 |
| Comparativ e Example 2 | **40** | 60 min | **1350** | 2 | 90 | 1100 | 850 | 620 | 1.8 | RT | **15** | 960 |
| Comparativ e Example 3 | 30 | **150 min** | **750** | 10 | **500** | 1050 | 920 | 750 | 2.6 | RT | 400 | 930 |

| | | | | | | | | | | | | |
|---|---|---|---|---|---|---|---|---|---|---|---|---|
| RT=room temperature | | | | | | | | | | | | |

The finally prepared finished non-oriented electrical steel plates of Examples 1-10 and the comparative steel plates of Comparative Examples 1-3 were sampled respectively, and the steel plate samples of Examples 1-6 and Comparative Examples 1-3 were observed and analysed. It was found that the steels of the Examples and the steels of the Comparative Examples all C- and N-containing inclusions, which are mainly AlN, VN, VC and V(CN) inclusions, and also contain a small amount of TiC, TiN, Ti (CN) and NbC, NbN, Nb (CN) generated from Nb and Ti.

Through further analysis and testing, the sizes of the C- and N-containing inclusions and the proportion of AlN content in (VN content +VC content +V(CN) content) in the steel plates of the Examples and the steel plates of the Comparative Examples were obtained respectively. The relevant observation and analysis results are listed in the following Table 3.

**Table 3**

| No. | A* | B* |
|---|---|---|
| Example 1 | 266 nm | 3.0 |
| Example 2 | 459 nm | 3.3 |
| Example 3 | 393 nm | 1.8 |
| Example 4 | 496 nm | 1.5 |
| Example 5 | 401 nm | 3.9 |
| Example 6 | 308 nm | 2.2 |
| Example 7 | 202 nm | 3.4 |
| Example 8 | 475 nm | 2.9 |
| Example 9 | 381 nm | 1.8 |
| Example 10 | 284 nm | 4.0 |
| Comparative Example 1 | **84 nm** | **0.8** |
| Comparative Example 2 | **117 nm** | **1.3** |
| Comparative Example 3 | **52 nm** | **0.2** |

| | | |
|---|---|---|
| Note: In Table 3 above, A* represents the average size of C- and N-containing inclusions; B* represents AlN content/(VN content +VC content +V(CN) content). | | |

Accordingly, after the observation and analysis of the above inclusions were completed, the finally prepared non-oriented electrical steel plates of Examples 1-10 and the comparative steel plates of Comparative Examples 1-3 were sampled again, and the magnetic induction B₅₀ and iron loss P_{15/50} of the steel plate samples of the Examples and Comparative Examples were tested. The test results obtained are listed in the following Table 4.

Relevant performance testing methods are as follows.

Magnetic induction B₅₀ test: In accordance with the national standard GB/T 3655-2008, the iron loss performance test was performed by an Epstein frame method. The test temperature was a constant temperature of 20 °C and the sample size was 30 mm × 300 mm, and the target mass was 0.5 kg. The test parameter was the magnetic induction B₅₀ of the steel plates of the Examples and Comparative Examples.

Iron loss P_{15/50} test: In accordance with the national standard GB/T 3655-2008, the iron loss performance test was performed by an Epstein frame method. The test temperature was a constant temperature of 20 °C and the sample size was 30 mm × 300 mm, and the target mass was 0.5 kg. The test parameter was the iron loss P_{15/50} of the steel plates of the Examples and Comparative Examples.

Table 4 lists the test results of magnetic induction B₅₀ and iron loss P_{15/50} of the non-oriented electrical steel plates of Examples 1-10 and the comparative steel plates of Comparative Examples 1-3.

**Table 4**

| No. | Magnetic induction B₅₀(T) | Iron loss P_{15/50}(W/kg) |
|---|---|---|
| Example 1 | 1.75 | 2.98 |
| Example 2 | 1.77 | 2.72 |
| Example 3 | 1.75 | 3.17 |
| Example 4 | 1.77 | 3.02 |
| Example 5 | 1.76 | 2.95 |
| Example 6 | 1.75 | 3.12 |
| Example 7 | 1.76 | 3.18 |
| Example 8 | 1.75 | 3.04 |
| Example 9 | 1.76 | 2.99 |
| Example 10 | 1.79 | 3.05 |
| Comparative Example 1 | 1.73 | 3.16 |
| Comparative Example 2 | 1.71 | 3.41 |
| Comparative Example 3 | 1.70 | 4.54 |

As shown in Table 4 above, in the present disclosure, the non-oriented electrical steel plates of Examples 1-10 have the magnetic induction B₅₀ within the range of 1.75-1.79 T, and the iron loss P_{15/50} within the range of 2.72-3.18 W/kg. The magnetic performances of the non-oriented electrical steel plates of Examples 1-10 are significantly superior to those of the comparative steel plates of Comparative Examples 1-3. Since Comparative Examples 1-3 do not meet the conditions defined in the present technical solutions, the implementation effects of Comparative Examples 1-3 are inferior to those of Examples 1-6.

Referring to Tables 1- 4, it can be seen that in Comparative Example 1, the content of V is 0.0004%, which is lower than the designed lower limit of 0.001% of the present disclosure; the content of S is 0.0027%, which exceeds the designed upper limit of 0.002% of the present disclosure. Correspondingly, the average size of carbide and nitride inclusions in the steel is 84 nm, which is lower than the designed lower limit of 200 nm of the present disclosure; B* is 0.8, which is lower than the designed lower limit of 1.5 of the present disclosure. In addition, Comparative Example 1 only adopts the conventional heating rate of 15 °C/s for finished product annealing, so the electromagnetic performance of the finished comparative steel plate of Comparative Example 1 is not good, with an iron loss P_{15/50} of 3.16 W/kg and a magnetic induction B₅₀ of 1.73 T. The magnetic inductance B₅₀ is lower than the designed requirement of the present disclosure.

In contrast, in Comparative Example 2, the content of Al is 0.0025%, which is lower than the designed lower limit of 0.2% of the present disclosure; the content of N is 0.0067%, which exceeds the designed upper limit of 0.0045% of the present disclosure. Correspondingly, the average size of carbide and nitride inclusions in the steel is 117 nm, which is lower than the designed lower limit of 200 nm of the present disclosure; B* is 1.3, which is lower than the designed lower limit of 1.5 of the present disclosure. Meanwhile, the superheat of the molten steel during casting is 40 °C, which exceeds the designed upper limit of 35 °C of the present disclosure; and the slab temperature when the cooling rate of the slab is limited is as high as 1350 °C, exceeding the design upper limit of 1150 °C of the present disclosure. In addition, the Comparative Example 2 only adopts the conventional heating rate of 15 °C/s for finished product annealing, so the electromagnetic performance of the finished comparative steel plate of Comparative Example 2 is not good, with an iron loss P_{15/50} of 3.41 W/kg and a magnetic induction B₅₀ of 1.71 T. The iron loss P_{15/50} and magnetic induction B₅₀ are both lower than the designed requirements of the present disclosure.

In contrast, in Comparative Example 3, the content of Mn is 0.65%, which exceeds the designed upper limit of 0.6% of the present disclosure; the content of S is 0.0042%, which exceeds the designed upper limit of 0.002% of the present disclosure; the content of V is 0.0008%, which is lower than the designed lower limit of 0.001% of the present disclosure. Correspondingly, the average size of carbide and nitride inclusions in the steel is 52 nm, which is lower than the designed lower limit of 200 nm of the present disclosure; B* is 0.2, which is lower than the designed lower limit of 1.5 of the present disclosure. In addition, in Comparative Example 3, the slab temperature when the cooling rate of the slab is limited is 750 °C, which is lower than the designed lower limit of 900 °C of the present disclosure. Therefore, the electromagnetic performance of the finished comparative steel plate of Comparative Example 3 is not good, with an iron loss P_{15/50} of 4.54 W/kg and a magnetic induction B₅₀ of 1.70 T. The iron loss P_{15/50} and magnetic induction B₅₀ are both lower than the designed requirements of the present disclosure.

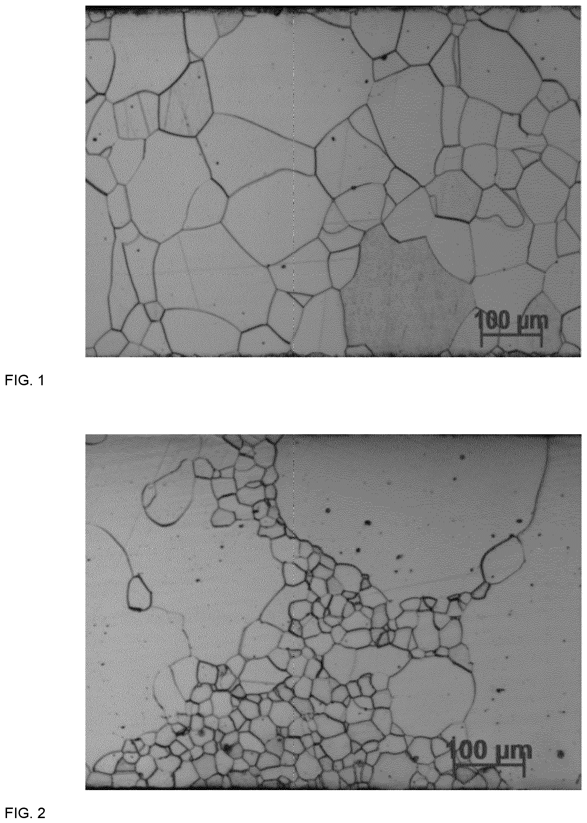

FIG. 1 is a microstructure photograph of the finished non-oriented electrical steel plate of Example 5.

As shown in FIG. 1, in the implementation mode of Example 5, the microstructure of the non-oriented electrical steel plate has been completely recrystallized, and the recrystallized grains are all relatively symmetrical equiaxed grains with coarse and developed grain sizes.

FIG. 2 is a microstructure photograph of the comparative steel plate of Comparative Example 3.

As shown in FIG. 2, in the implementation mode of Comparative Example 3, the microstructure of the comparative steel has been completely recrystallized, but the recrystallized grains have a low proportion of equiaxed grains and are small in size, and the grain size is relatively dispersed. Among them, the grains with larger grain size are abnormally grown "island grains".

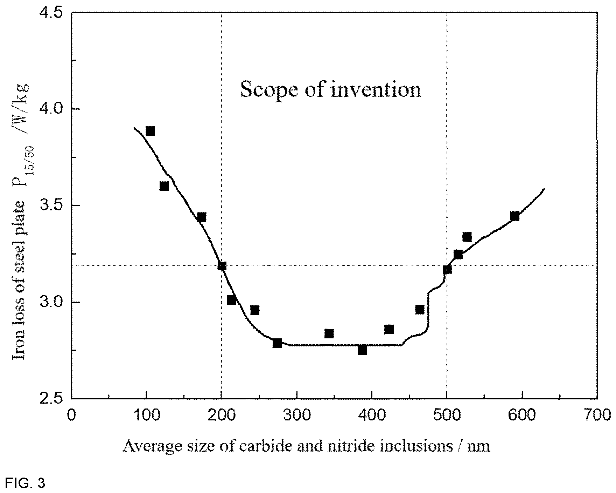

FIG. 3 schematically shows the relationship between the average size of carbide and nitride inclusions and the iron loss of the finished non-oriented electrical steel plate.

As shown in FIG. 3, with the increase of the average size of carbide and nitride inclusions in the steel, the iron loss of the finished non-oriented electrical steel plate gradually decreases, and remains stable within the range of 200-500 nm, and meets the control requirements of the designed upper limit of 3.2 W/kg of the present disclosure. However, when the size exceeds 500 nm, the iron loss of the finished non-oriented electrical steel plate increases with the increase of the average size of carbide and nitride inclusions in the steel, and cannot meet the iron loss control requirements designed in the present invention.

It should be noted that the prior art part in the scope of protection of the present invention is not limited to the embodiments given in the application documents, and all prior art that does not contradict the solution of the present invention, including but not limited to the prior art Patent documents, prior publications, prior public use, etc., can all be included in the scope of protection of the present invention.

Moreover, the combination of features of the present disclosure is not limited to the combinations described in the claims or the specific embodiments, and all features of the present disclosure can be freely combined or combined in any way unless contradicted by each other.

It should also be noted that the embodiments listed above are only specific examples of the present disclosure. It is obvious that the present disclosure is not limited to the above embodiments, and similar variations or modifications that those skilled in the art can directly derive from the present disclosure or can be easily replaced shall all fall within the protection scope of the claims of the present invention.

## Claims

1. A non-oriented electrical steel plate with excellent magnetic properties, comprising, in addition to Fe and inevitable impurities, the following chemical elements in percentage by mass:
0<C≤0.0025%, Si: 0.2-1.6%, Mn: 0.2-0.6%, Al: 0.2-0.6%, V: 0.001-0.008%, N: 0.002-0.0045%, 0<Nb≤0.003% and 0<Ti≤0.003%.

2. The non-oriented electrical steel plate according to claim 1, wherein the non-oriented electrical steel plate comprises the following chemical elements in percentage by mass:
0<C≤0.0025%, Si: 0.2-1.6%, Mn: 0.2-0.6%, Al: 0.2-0.6%, V: 0.001-0.008%, N: 0.002-0.0045%, 0<Nb≤0.003%, 0<Ti≤0.003%, with the balance being Fe and inevitable impurities.

3. The non-oriented electrical steel plate according to claim 1 or 2, wherein the percentage by mass of V is 0.0015-0.0045%.

4. The non-oriented electrical steel plate according to claim 1 or 2, wherein in the inevitable impurities, S≤0.002%.

5. The non-oriented electrical steel plate according to claim 1 or 2, wherein the inclusions are inclusions containing C and/or N, mainly composed of AlN, VN, VC and V(CN).

6. The non-oriented electrical steel plate according to claim 5, wherein the inclusions containing C and/or N have a size of 200-500 nm.

7. The non-oriented electrical steel plate according to claim 5, wherein the following formula is satisfied: 1.5 ≤ AlN content/(VN content + VC content + V(CN) content) ≤4.0.

8. The non-oriented electrical steel plate according to claim 1 or 2, wherein the non-oriented electrical steel plate has an iron loss P_{15/50} of 3.2 W/kg or less and a magnetic induction B₅₀ of 1.75 T or more.

9. A method of manufacturing the non-oriented electrical steel plate with excellent magnetic properties according to any one of claims 1 to 8, comprising the following steps:
(1) smelting and casting;
(2) hot rolling, wherein the steel coil is not subjected to normalizing annealing or cover annealing after hot rolling, but is directly introduced to the next step;
(3) acid pickling;
(4) cold rolling; and
(5) finished product annealing, wherein the cold-rolled steel plate is rapidly heated to a target soaking temperature at a heating rate of 80-1000 °C/s.

10. The manufacturing method according to claim 9, **characterized in that**, in step (5), the target soaking temperature is 800-1000°C.

11. The manufacturing method according to claim 9, **characterized in that**, during the casting process in step (1), the superheat of the molten steel is controlled to be 10-35°C, and the change time between solid and liquid phases is controlled within 10s ~120min, as the molten steel casting proceeds, in the range of 900-1150° C, control the cooling rate of the slab to ≤10° C/min.

12. The manufacturing method according to claim 9, **characterized in that**, in step (2), during hot rolling, the casting slab is controlled to be in the furnace for 120-360 minutes, the starting rolling temperature is 1050-1150° C., and the finishing rolling temperature is 650~950°C, coiling temperature is 500~900°C.

13. The manufacturing method according to claim 9, **characterized in that**, in step (2), the target thickness of the hot-rolled steel plate is controlled to be 0.8-3.5 mm; in step (4), one-time cold rolling is performed to the target thickness of the finished product.

## Amended claims

### Amended claims under Art. 19.1 PCT

1. A non-oriented electrical steel plate, comprising, in addition to Fe and inevitable impurities, the following chemical elements in percentage by mass:
0<C≤0.0025%, Si: 0.2-1.6%, Mn: 0.2-0.6%, Al: 0.2-0.6%, V: 0.0031-0.008%, N: 0.002-0.0045%, 0<Nb≤0.003% and 0<Ti≤0.003%.

2. The non-oriented electrical steel plate according to claim 1, wherein the non-oriented electrical steel plate comprises the following chemical elements in percentage by mass:
0<C≤0.0025%, Si: 0.2-1.6%, Mn: 0.2-0.6%, Al: 0.2-0.6%, V: 0.0031-0.008%, N: 0.002-0.0045%, 0<Nb≤0.003%, 0<Ti≤0.003%, with the balance being Fe and inevitable impurities.

3. The non-oriented electrical steel plate according to claim 1 or 2, wherein the percentage by mass of V is 0.0031-0.0045%.

4. The non-oriented electrical steel plate according to claim 1 or 2, wherein the inevitable impurities include: S≤0.002%.

5. The non-oriented electrical steel plate according to claim 1 or 2, wherein the non-oriented electrical steel plate comprises inclusions, which are inclusions containing C and/or N, mainly composed of AlN, VN, VC and V(CN).

6. The non-oriented electrical steel plate according to claim 5, wherein the inclusions containing C and/or N have a size of 200-500 nm.

7. The non-oriented electrical steel plate according to claim 5, wherein the inclusions satisfy the following formula: 1.5 ≤ AlN content/(VN content + VC content + V(CN) content) ≤4.0.

8. The non-oriented electrical steel plate according to claim 1 or 2, wherein the non-oriented electrical steel plate has an iron loss P_{15/50} of 3.2 W/kg or less and a magnetic induction B₅₀ of 1.75 T or more.

9. A method of manufacturing the non-oriented electrical steel plate according to any one of claims 1 to 8, comprising the following steps:
(1) subjecting molten steel to smelting and casting to obtain a slab;
(2) subjecting the slab to hot rolling to obtain a steel coil, wherein the steel coil is not subjected to normalizing annealing or cover annealing after hot rolling, but is directly introduced to the next step;
(3) performing acid pickling to obtain an acid-pickled steel plate;
(4) subjecting the acid-pickled steel plate to cold rolling to obtain a cold-rolled steel plate; and
(5) continuous annealing, wherein the cold-rolled steel plate is heated to a target soaking temperature at a heating rate of 80-1000 °C/s.

10. The method according to claim 9, wherein the method satisfies at least one of the following conditions:
in step (5), the target soaking temperature is 800-1000 °C;
in the casting process of step (1), the molten steel has a superheat of 10-35 °C, a time for transition between solid phase and liquid phase is 10 s-120 min, the temperature of the casting is within a range of 900-1150 °C, and the slab is cooled at a rate of 10 °C/min or less;
in step (2), during the hot rolling, a time for the slab to stay in a furnace is 120-360 min, an initial rolling temperature is 1050-1150 °C, a final rolling temperature is 650-950 °C, and a coiling temperature is 500-900 °C;
in step (2), the hot-rolled steel plate has a target thickness of 0.8-3.5 mm; and/or
in step (4), the acid-pickled steel plate is cold-rolled to a target cold rolling thickness in one time.
